# FASCICULE DE BREVET EUROPEEN

(11) **EP 1 155 978 B1**
(45) Date de publication et mention de la délivrance du brevet: **20.10.2004**
(21) Numéro de dépôt: 01480020.5
(22) Date de dépôt: 02.03.2001
(51) Int. Cl.: B65G 1/137, B65G 1/08

(54) **Dispositif et installation de délivrance d'objets stockés en ligne**
Vorrichtung und Anlage zum Zuführen von in Reihe gespeicherten Gegenständen
Device and assembly for delivering objects stored in a row

(30) Priorité: 10.04.2000 FR 0004600
(43) Date de publication de la demande: 21.11.2001
(60) Demande divisionnaire: 02020273.5
(73) Titulaire: Pharmax S.A., 83520 Roquebrune sur Argens (FR)
(72) Inventeur: Nizard, Henri, 83520 Roquebrune/Argens (FR); Rossi, Luc, 83210 Belgentier (FR)
(74) Mandataire: Hautier, Jean-Louis

(56) Documents cités:
- EP-A- 0 515 350
- EP-A- 0 870 704
- US-A- 5 096 090
- US-A- 5 768 139
- US-A- 5 772 392

## Description

La présente invention concerne d'abord un dispositif de délivrance d'objets stockés en ligne.

Elle concerne également une installation apte à mettre en oeuvre le dispositif selon l'invention.

Le dispositif de délivrance ici présenté comporte des moyens de guidage des objets stockés, une butée de l'objet placée en tête de ligne afin de le retenir et des moyens d'éjection dudit objet hors de la butée lorsque la délivrance de l'objet est commandée.

L'installation selon l'invention intègre un ou plusieurs dispositifs de délivrance au sein d'un ou plusieurs meubles.

La gestion de stock est un problème de plus en plus important dans le domaine de la vente de produits pharmaceutiques ou para-pharmaceutiques.

Qui plus est, le pharmacien ou le vendeur perd beaucoup de temps en recherche du produit demandé par le client alors que ce temps pourrait être consacré à des conseils pratiques ou d'ordre médical.

Par ailleurs, les méthodes conventionnelles de stockage des médicaments, notamment par différentes armoires à tiroirs, peuvent s'avérer encombrantes et peu pratiques quant au repérage des différents types et marques de médicaments.

Différents dispositifs de distribution et de stockage de médicaments ont été proposés.

Dans ce domaine, on connaît particulièrement le document EP-A-0.515.350 qui présente un dispositif d'éjection pour un dispositif d'accumulation servant à recevoir et à délivrer un par un des objets notamment pour un dispositif d'accumulation d'une installation de préparation de commandes pour l'expédition.

Le dispositif d'accumulation est tel que les objets sont appliqués selon une précontrainte contre une extrémité de sortie dans le dispositif d'accumulation.

Le dispositif d'éjection selon ce document comporte un épaulement de butée pour permettre l'appui de l'objet qui est le plus proche de l'extrémité de sortie.

En outre, un piston de levage est disposé en avant de l'épaulement de butées et est déplaçable perpendiculairement à la direction de délivrance entre une position située essentiellement dans le plan de la surface de support des objets devant être délivrés et une position correspondant au bord supérieur de l'épaulement de butée.

Cette technique repose sur un système d'éjection des boîtes qui utilise un piston de levage se déplaçant perpendiculairement à la direction de délivrance.

Ce piston est actionné par un fluide sous pression qui est, en pratique, de l'air comprimé.

Un tel dispositif a l'inconvénient d'être mécaniquement difficile à mettre en oeuvre puisqu'il repose sur un système pneumatique nécessitant des moyens relativement lourds tels qu'un compresseur d'air et des circuits complexes pour véhiculer l'air.

Par ailleurs, une telle conception dispose d'une faible modularité au niveau des espaces de rangement.

La présente invention permet de remédier aux inconvénients des dispositifs connus actuellement et propose notamment d'alléger la structure des installations de délivrance d'objets tels des médicaments.

Pour ce faire, l'invention a l'avantage de permettre de se passer de l'usage d'un fluide sous pression et de mettre en oeuvre des actionnements alimentés en énergie électrique de faible puissance.

Qui plus est, l'invention a pour objectif de rendre plus souple l'utilisation des dispositifs de délivrance des objets notamment en permettant une meilleure modularité des installations.

Pour ce faire, elle exploite des particularités techniques de connexion électrique qui permettent d'éviter des branchements lourds, complexes, coûteux et peu adaptés à la modularité.

C'est ainsi que l'utilisateur du meuble ou d'une installation pourra lui-même procéder à une nouvelle configuration de ce meuble.

Un autre avantage de l'invention est de permettre, une commande de la délivrance des objets stockés par le biais d'un bus de données correspondant au bus d'alimentation en énergie électrique.

L'invention permet également de fiabiliser l'installation en minimisant les opérations de connexion nécessaires et en mettant en oeuvre des moyens d'actionnement de conception peu complexe.

D'autres buts et avantages apparaîtront au cours de la description qui suit qui n'est cependant donnée qu'à titre indicatif.

La présente invention concerne un dispositif de délivrance d'objets stockés en ligne comportant :
- des moyens de guidage des objets,
- une butée de l'objet placé en tête de ligne,
- des moyens d'éjection dudit objet hors de la butée
et des moyens électriques d'actionnement alimentés par une source d'alimentation en énergie électrique via un circuit d'alimentation électrique, caractérisé par le fait qu'il comprend un circuit de commande des moyens électriques d'actionnement dont le bus de transmission d'instructions est ledit circuit d'alimentation.

Ce dispositif pourra se présenter suivant les modes de réalisation énoncés ci-après :
- les moyens de guidage sont au moins partiellement en un matériau électriquement conducteur en contact avec une source d'alimentation en énergie électrique et avec les moyens d'actionnement afin de les alimenter,
- les moyens de guidage sont constitués d'une glissière dont le sens long est orienté suivant la direction de la ligne d'objets et disposant d'une surface de glissement inclinée par rapport à l'horizontale de sorte que l'objet en tête de ligne soit en partie basse,
- la butée est un rebord faisant saillie en partie basse de la surface de glissement.
- les moyens d'éjection comprennent un moyen élévateur apte à élever la partie avant de l'objet en tête de ligne au-delà de la hauteur du rebord,
- le moyen élévateur est constitué d'une lame flexible dont une extrémité est fixe et l'autre extrémité est mobile en translation, apte à appliquer un effort de poussée sur la face inférieure de l'objet placé en tête de ligne lorsqu'elle est fléchie ;
- les moyens électriques d'actionnement comprennent un électromaimant dont le noyau est relié à l'extrémité mobile de la lame flexible ;
- le moyen élévateur est une roue à ailes aptes à appliquer un effort de poussée sur la face inférieure de l'objet placé en tête de ligne,
- les moyens électriques d'actionnement comprennent un fil à mémoire de forme fixé d'une part à la glissière et d'autre part à une tirette entraînant le moyen élévateur,
- les moyens d'actionnement comprennent un organe de retour élastique en position,
- les moyens de guidage intègrent un circuit imprimé participant au circuit de commande des moyens électriques d'actionnement,
- le fil à mémoire de forme est fixé à la glissière par le biais d'un circuit imprimé,
- les moyens de guidage sont montés entre une traverse avant et une traverse arrière solidaires de montants,
- que la source d'alimentation en énergie électrique est un générateur de courant continu,
- chaque traverse est au moins partiellement en un matériau conducteur relié à l'un des pôles de la source,
- la traverse reliée au pôle positif de la source est fixée aux moyens de guidage en continuité électrique.

L'invention concerne également une installation pour la délivrance d'objets stockés en ligne à l'intérieur d'un ou plusieurs meubles intégrant un ou plusieurs dispositifs de délivrance.

Une telle installation pourra être configurée suivant les modes de réalisation suivants :
- elle comporte une carte de commande pilotant chaque circuit de commande et recevant ses instructions depuis un réseau informatique,
- la source d'alimentation en énergie électrique est un générateur de courant continu commun à tous les dispositifs de délivrance,
- le codage des données binaires sur le bus est constitué par deux types d'interruptions de l'alimentation de longueurs différentes et correspondant soit à un 1 logique, soit à un 0 logique.

Les dessins ci-joints sont donnés à titre d'exemples indicatifs et non limitatifs. Ils représentent un mode de réalisation préféré selon l'invention. Ils permettront de comprendre aisément l'invention.
La figure 1 est une vue générale de face d'un meuble qui peut équiper l'installation selon l'invention et disposant de dispositifs de délivrance.
La figure 2 est une vue de côté d'une telle installation dans ce même mode de réalisation.
La figure 3 est une vue de côté d'une glissière correspondant à un mode particulier de réalisation de l'invention.
La figure 4 est une vue en perspective d'une telle glissière représentée de façon partielle.
Les figures 5a, 5b, 5c et 5d montrent la partie basse d'une glissière au cours de différentes étapes de fonctionnement du dispositif de délivrance.
La figure 6 est une vue de côté d'une glissière présentant un exemple de réalisation des contacts électriques opérés.
La figure 7 est une vue générale d'un mode particulier de mise en oeuvre d'une installation selon l'invention et particulièrement de ses moyens de commande.
Les figures 8 et 9 illustrent une variante de l'invention en ce qui concerne le fonctionnement du dispositif de délivrance.

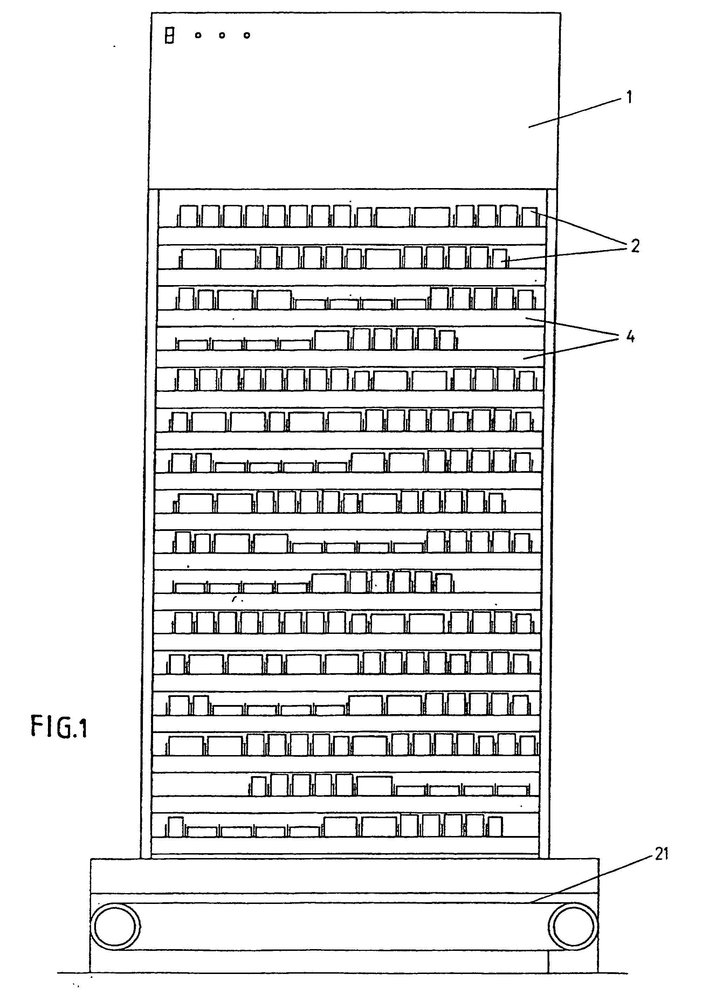

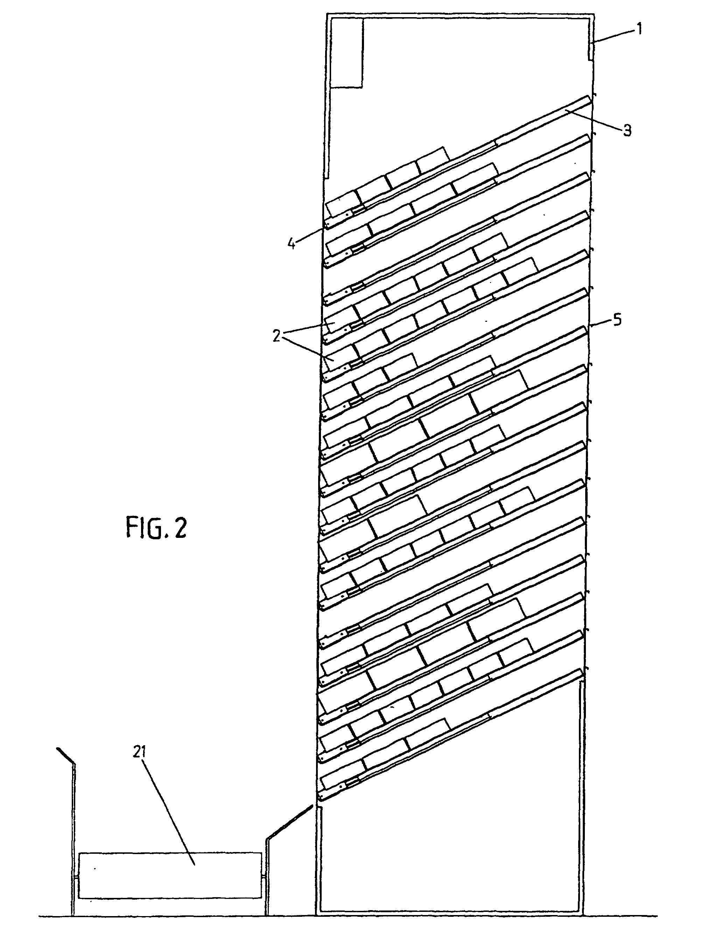

En se référant aux figures 1 et 2, on constate qu'une installation selon l'invention comporte un ou plusieurs meubles comme celui repéré 1 à ces figures.

Un tel meuble comprend de façon courante une structure de châssis et un volume intérieur au sein duquel sont intégrés des dispositifs de délivrance d'objets 2, 24 stockés en ligne.

Tels que représentés, les dispositifs de délivrance peuvent être superposés ou juxtaposés afin de remplir l'ensemble du volume intérieur du meuble 1.

A titre préférentiel, les objets stockés sur une ligne sont sensiblement de même nature.

Dans le cas de l'application à la délivrance de médicaments, il s'agira d'une ligne de mêmes médicaments.

Pour supporter les objets 2, 24, des moyens de guidage sont présents.

Il s'agit, dans le cas des figures, d'un organe sensiblement allongé présentant une surface de glissement 8 apte à venir en contact avec la partie inférieure des objets 2, 24.

Dans le mode particulier illustré aux figures, ces moyens de guidage sont constitués par une glissière 3 que l'on peut voir être orientée suivant la direction de la ligne d'objets 2, 24.

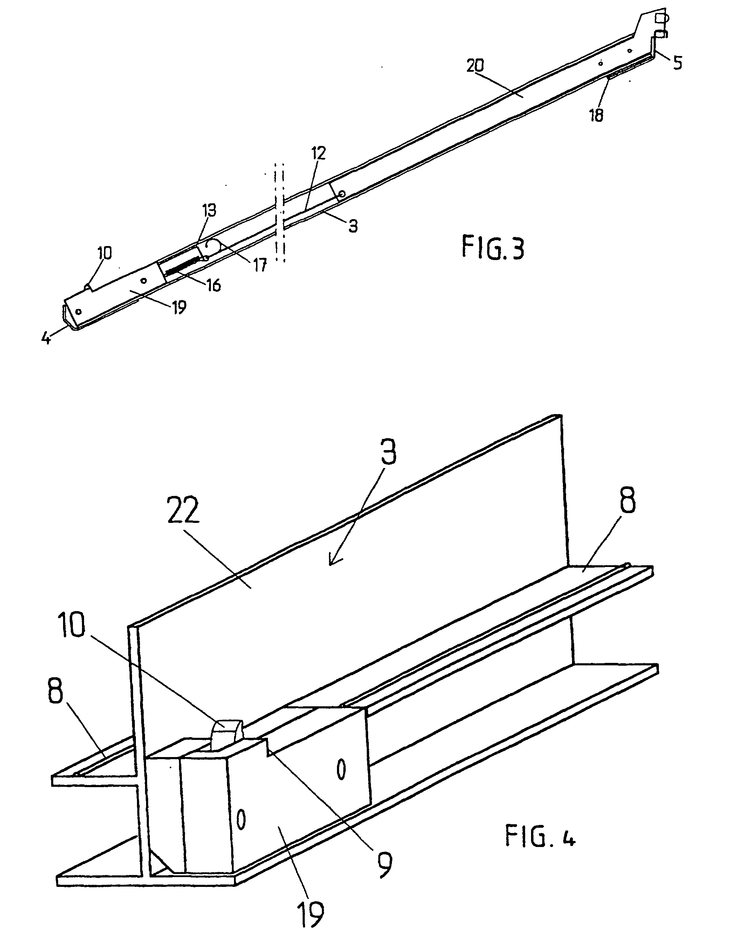

La figure 3 montre une vue générale d'une telle glissière 3 alors que la figure 4 illustre la présence d'une surface de glissement 8 pour les objets stockés 2, 24.

Dans l'exemple des figures, la surface de glissement 8 de la glissière 3 est inclinée par rapport à l'horizontal de sorte que l'objet 2 en tête de ligne soit en partie basse de la surface de glissement 8.

De cette façon, sous l'effet du poids, les objets stockés ont une tendance naturelle à s'orienter vers la partie basse de la glissière 3 qui constitue la zone où s'effectue la délivrance.

Bien entendu, d'autres moyens auraient pu être utilisés pour effectuer cette orientation vers la zone de délivrance et notamment des systèmes de poussée par l'intermédiaire de ressorts pourraient être mis en oeuvre.

Dans un mode particulier de réalisation, une glissière 3 sert à la fois à maintenir et guider des objets sur une ligne mais aussi à guider une deuxième ligne d'objets placés de façon juxtaposée à la première.

En ce sens, une deuxième zone de glissement 8 pourra apparaître tel que montré en figure 4.

Le dispositif de délivrance selon l'invention comporte par ailleurs une butée 9 de l'objet placé en tête de ligne.

La figure 4 montre parfaitement un exemple de réalisation d'une telle butée sous forme d'un rebord faisant saillie en partie basse de la surface de glissement 8.

La butée 9 intercepte la surface de glissement 8 afin de retenir l'objet 2.

Le dispositif ici présenté comprend également des moyens d'éjection de l'objet 2 hors de la butée 9.

Les moyens d'éjection permettent de délivrer l'objet 2 de son contact avec la butée 9.

Dans un mode particulier de réalisation, la butée 9 et les moyens d'éjection sont constitués par une seule et même pièce escamotable.

Lorsque la pièce est relevée, elle constitue une butée pour l'objet 2.

Lorsque cette pièce est retirée ou escamotée, elle libère la délivrance par glissement de l'objet 2.

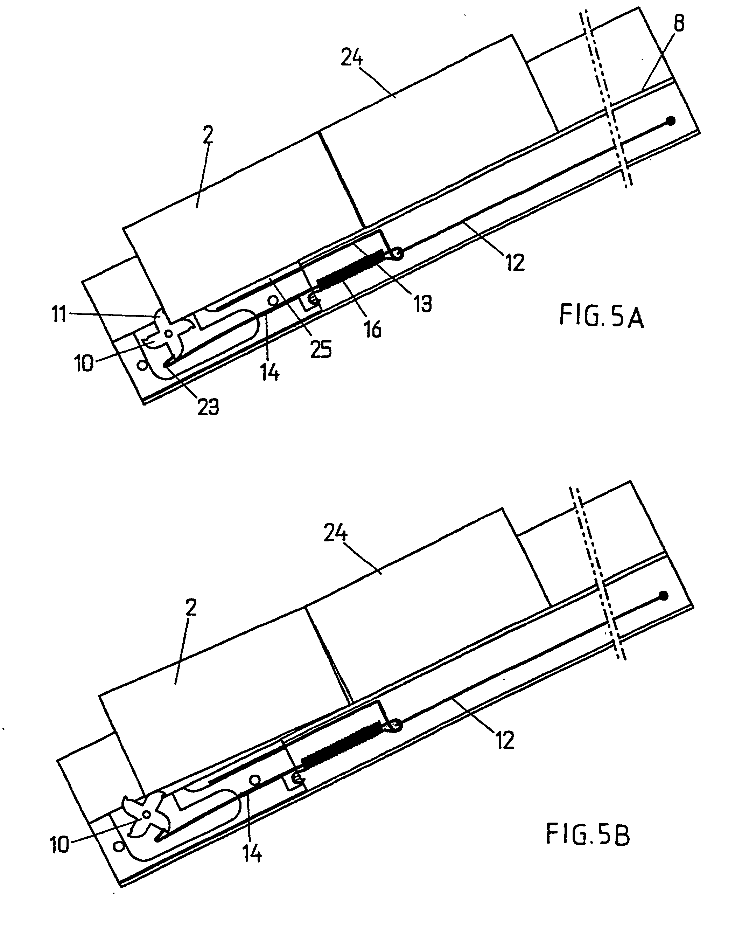

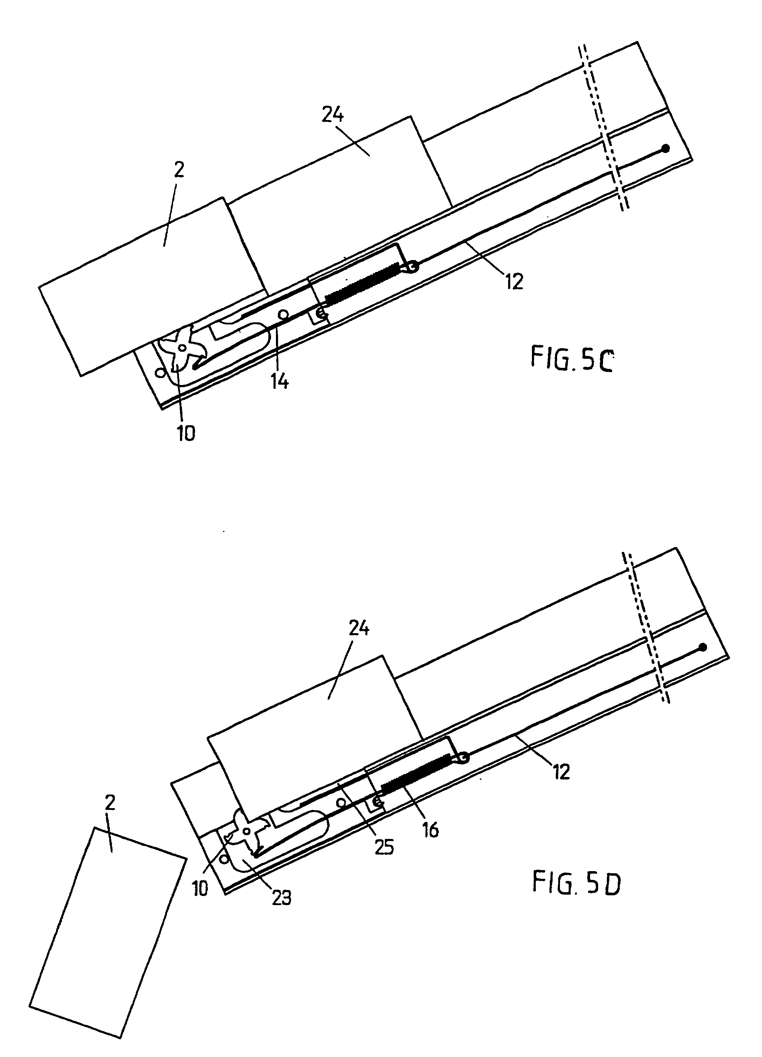

Selon un autre mode de réalisation, tel qu'il apparaît aux différentes figures et notamment aux figures 5a, 5b, 5c et 5d, les moyens d'éjection comprennent un moyen élévateur 10 apte à élever la partie avant de l'objet 2.

Pour la bonne compréhension de la présente description, et pour la suite de celle-ci, on entend par zone avant ou partie avant la partie d'un objet ou d'un élément constitutif du dispositif placé sensiblement du côté de la zone de délivrance de l'objet.

A contrario, on entend par arrière la partie des objets où les éléments constitutifs du dispositif placés sensiblement vers l'arrière du meuble 1.

Le moyen élévateur 10 a pour fonction d'élever légèrement la partie avant de l'objet 2 afin qu'elle dépasse la hauteur de la butée 9.

Pour ce faire, le moyen élévateur 10 peut être constitué par une roue à ailes 11, ces ailes étant aptes à s'appliquer sous la boîte 2 afin d'exercer un effort de poussée sur celle-ci.

Il est à noter que, avantageusement, les ailes 11 servent également à transmettre un mouvement de rotation à la roue constituant le moyen élévateur 10.

Les moyens d'éjection peuvent être intégrés dans un carter 19.

Les moyens d'éjection sont, selon l'invention, actionnés par des moyens électriques.

Par ailleurs, l'invention propose une alimentation particulière en énergie électrique de ces moyens.

En effet, on construit les moyens de guidage de telle sorte qu'ils sont au moins partiellement en un matériau électriquement conducteur et pour qu'ils soient en contact avec une source d'alimentation en énergie électrique et d'autre part, avec les moyens d'actionnement.

De cette façon, les moyens d'actionnement sont alimentés électriquement par le seul biais des moyens de guidage sans faire appel à des câbles ou autres moyens de connexion actuellement utilisés de façon courante.

A titre préférentiel, les moyens électriques d'actionnement comprennent un fil à mémoire de forme 12 représenté dans différentes phases de fonctionnement aux figures 5a à 5d.

On connaît actuellement des fils à mémoire de forme qui, sous l'effet d'un courant, se contractent et reprennent ensuite leur forme initiale lorsque le courant est supprimé.

De façon avantageuse, l'invention pourra utiliser un fil à mémoire de forme 12 apte à entraîner le moyen élévateur 10 dans son mouvement.

Pour ce faire, le fil à mémoire de forme 12 est fixé d'une part à la glissière 3 et d'autre part à une tirette 14 entraînant le moyen élévateur 10.

Une telle configuration apparaît en figure 5a.

Comme illustré, l'entraînement du moyen élévateur 10 peut être effectué par application de l'extrémité 23 de la tirette 14 sur l'une des ailes 11 du moyen élévateur 10.

En soumettant le fil à mémoire de forme 12 à un courant électrique, il se contracte pour atteindre une position illustrée en figure 5b.

Dans son mouvement, il entraîne la tirette 14 et le moyen élévateur 10 qui pivote.

Ce faisant, le moyen élévateur 10 relève la partie basse de l'objet 2.

Au cours de ce mouvement, la partie basse de l'objet 2 passe au-delà du rebord supérieur de la butée 9.

L'objet 2 s'en trouve libéré comme illustré en figure 5c.

Cette opération effectuée, le fil à mémoire de forme 12 est relâché en supprimant son alimentation en énergie électrique.

Il reprend sa forme initiale éventuellement aidée par le biais d'un organe de retour élastique en position sous forme d'un ressort 16 dans le mode de réalisation illustré à la figure 5d.

Préférentiellement, la tirette 14 est dotée d'une tige 13 apte à translater dans une rainure 25.

Un guidage du coulissement de la tirette 14 est ainsi facilement opérée.

Lorsque l'objet 2 est délivré, l'objet suivant 24 est amené par glissement en contact avec la butée 9.

Comme indiqué précédemment, l'une des particularités de l'invention est de permettre l'alimentation des moyens d'actionnement des moyens d'éjection par le biais des moyens de guidage.

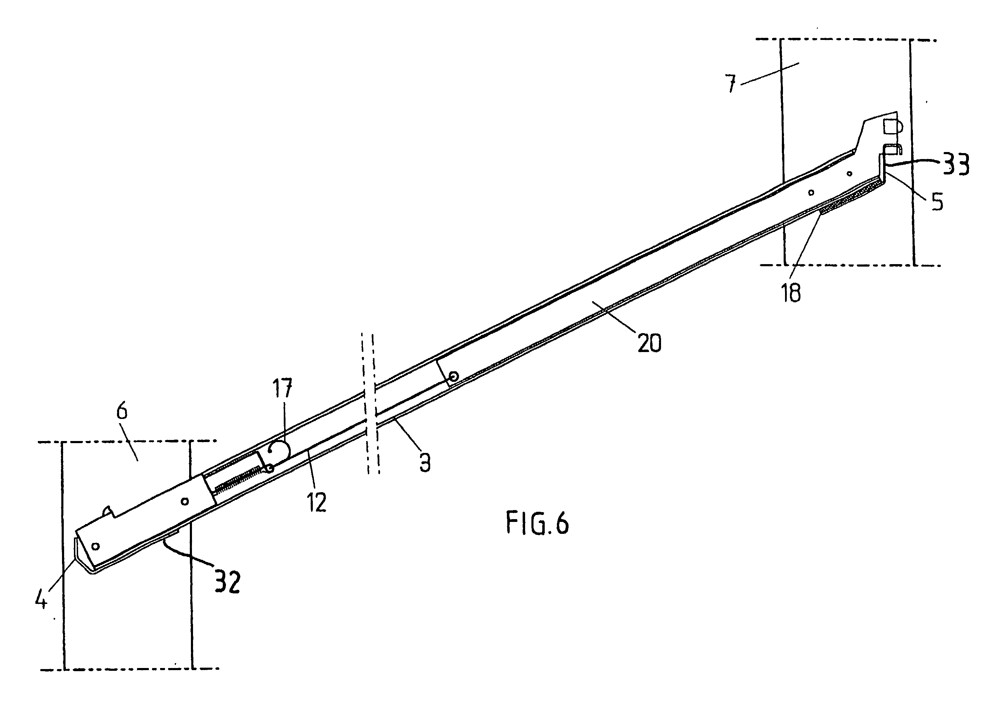

On décrit ci-après plus en détail un mode de réalisation particulier de cette alimentation dans le cas où les moyens de guidage sont constitués par une glissière 3 et les moyens d'actionnement des moyens d'éjection par un fil à mémoire de forme 12 tel que cela apparaît en figure 6.

L'un des avantages de l'utilisation d'un fil 12 à mémoire de forme est qu'il ne nécessite qu'une alimentation de faible puissance en énergie électrique.

Notamment, un générateur de courant continu peut être utilisé.

Dans le cadre de l'invention, la glissière 3 doit être reliée électriquement à cette source d'alimentation.

Pour ce faire, un montant 6 tel qu'apparaissant partiellement en figure 6 peut être relié à la source d'alimentation en énergie électrique et aux glissières 3.

La liaison aux glissières 3 est opérée préférentiellement par le biais d'une traverse avant 4 apparaissant également à la figure 6.

Il s'entend que dans ce cadre, la traverse 4 est, comme la glissière 3, constituée au moins partiellement en un matériau électriquement conducteur.

On notera en figure 6 le contact effectué entre la traverse 4 et la glissière 3 afin d'établir la continuité électrique.

La glissière 3 est quant à elle reliée au fil 12 à mémoire de forme.

On obtient donc ainsi un circuit d'alimentation du fil 12 sans nécessiter d'élément de connectique particulier ni de câble.

Le pôle négatif ou le neutre de la source d'alimentation en courant continu permet quant à lui de constituer la référence électrique du système et peut être conduite jusqu'à chaque glissière 3 par le biais d'un autre montant 7 et d'une traverse arrière 5.

Bien entendu, afin d'éviter tout court circuit, un isolant 18 est positionné entre la traverse 5 et la glissière 3.

Sans sortir du cadre de l'invention, on aurait pu inverser les rôles de conduction électrique des montants 6 et 7 et des traverses 4 et 5.

Un conducteur 17 sous forme d'un fil souple par exemple peut être utilisé pour établir la continuité électrique entre la glissière 3 et le fil 12 à mémoire de forme.

L'invention ici présentée concerne également une installation pour la délivrance d'objets stockés en ligne.

Cette installation est apte à mettre en oeuvre un ou plusieurs dispositifs de délivrance tels que décrits précédemment.

En particulier, les dispositifs de délivrance sont intégrés dans un ou plusieurs meubles 1 dont un exemple de configuration est donné aux figures 1 et 2.

D'une façon générale, le stockage des médicaments est opéré au sein des meubles 1.

Par ailleurs, l'installation comprendra préférentiellement d'autres éléments permettant notamment la commande des dispositifs de délivrance suivant les demandes des opérateurs tels un pharmacien.

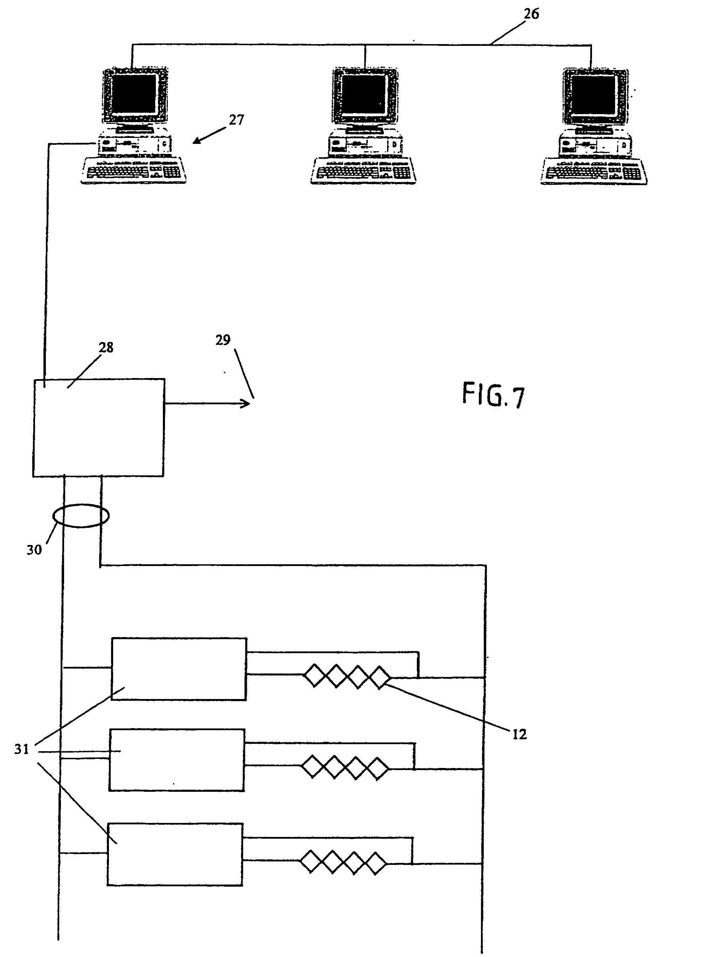

Dans ce cadre, il faut pouvoir commander plusieurs dispositifs de délivrance correspondant chacun à un type de médicament à partir d'un même poste de commande repéré 27 à la figure 7.

Pour ce faire, on dote chaque dispositif de délivrance d'un circuit de commande permettant de commander les moyens électriques d'actionnement des moyens d'éjection.

Cette pluralité de circuits de commande est repérée 31 en figure 7.

Par ailleurs, l'ensemble des circuits de commande 31 est relié à une carte de commande 28 recevant ses instructions depuis un réseau informatique 26 composé essentiellement de postes de travail pour les opérateurs.

Dans un exemple de configuration, un poste principal 27 est placé en bout de réseau informatique 26 afin de réaliser une transmission globale de toutes les informations issues des opérateurs vers la carte de commande 28 par le biais d'une liaison qui peut par exemple être une liaison de type série.

Essentiellement, la carte de commande 28 comprend un microprocesseur et une interface aptes à gérer le bus de données en direction des circuits de commande 31 et d'éventuelles accessoires 29.

Les accessoires 29 peuvent notamment être des éléments de signalisation ou des actionneurs annexes.

On a repéré 30 en figure 7 le bus permettant la transmission des données entre la carte de commande 28 et chacun des circuits de commande 31.

Par ailleurs, la figure 7 montre le cas d'une commande des moyens d'actionnement sous forme d'un fil 12 à mémoire de forme.

Bien entendu, la sortie de commande de chacun des circuits de commande 31 aurait pu être reliée à tout type de moyen d'actionnement électrique.

Avantageusement, on utilise le circuit d'alimentation en énergie électrique des moyens d'actionnement électrique pour réaliser la transmission des données de commande en direction des circuits de commande 31.

Pour ce faire, en plus de la connectique déjà exposée pour l'alimentation en énergie électrique des moyens d'actionnement, l'alimentation est reliée au circuit de commande 31.

Bien entendu, ce circuit unique d'alimentation et de transmission de données sera particulièrement avantageux à mettre en oeuvre dans le cas d'utilisation d'un fil à mémoire de forme qui ne nécessite que de faibles puissances et notamment des basses tensions.

Dans le cadre de cette transmission de données par l'alimentation électrique, la source d'alimentation en énergie électrique sera un générateur de courant continu commun à tous les dispositifs de délivrance.

Par ailleurs, on effectue un codage des données binaires à transmettre sur le bus 30 d'une façon spécifique.

En effet, on transcrit les 0 ou les 1 logique par des interruptions d'alimentation de longueur différente suivant qu'il s'agit d'un 0 ou d'un 1.

A titre d'exemple, pour un bit à 0, on procédera à une interruption courte de l'alimentation.

Pour un bit à 1, l'interruption sera de plus grande longueur.

Bien entendu, la durée des interruptions de l'alimentation sera choisie suffisamment courte pour ne pas gêner l'alimentation en énergie électrique des moyens d'éjection.

On décrit ci-après un exemple de mise en oeuvre et de fonctionnement d'une installation constituée selon la présente invention.

Dans un premier temps, un opérateur tel un pharmacien effectue une entrée par le biais d'un poste de commande 27 dans le réseau informatique 26.

En particulier, une instruction de délivrance d'un médicament sera effectuée.

Cette instruction est transmise à la carte de commande 28 permettant la gestion centralisée de l'ensemble de dispositif de délivrance d'objets 2 décrits précédemment.

Via le circuit d'alimentation, un ordre peut être transmis et compris par un circuit de commande 31 spécifique à l'instruction de délivrance du médicament désiré.

Notamment, à chaque circuit de commande 31 correspondra une adresse spécifique codée en binaire et transmise par le bus 30 sous forme d'interruptions successives de l'alimentation.

Une fois l'instruction reçue au niveau de l'un des circuits de commande 31, celui-ci agit sur les moyens d'actionnement électriques des moyens d'éjection.

Dans le cas d'un fil à mémoire de forme 12, le circuit de commande 31 opère une alimentation du fil 12 en fermant le circuit électrique.

De ce fait, le fil 21 se rétracte entraînant avec lui la tirette 14 et le moyen élévateur 10.

Celui-ci effectue un mouvement de rotation qui, en s'appliquant sur la face inférieure de l'objet 2, permet de le relever hors de la butée 9.

Une fois un relevage suffisant effectué, le glissement de l'objet 2 peut être opéré par simple action du poids.

L'objet 2 est alors délivré comme apparaissant à la figure 5d.

Selon une possibilité, l'objet 2 est alors reçu par un ou plusieurs tapis roulant 21 permettant le transfert du médicament jusqu'au poste de travail de l'opérateur.

Dès que la délivrance est intervenue, l'alimentation des moyens d'actionnement électriques est coupée, et l'objet 24 suivant l'objet 2 parvient à la position de butée contre la butée 9.

Le dispositif de délivrance considéré est alors prêt pour une nouvelle opération.

Une même suite d'étapes peut être opérée sur le même dispositif de délivrance pour délivrer un même type de médicament ou sur un autre des dispositifs intégrés dans les meubles 1 de façon à poursuivre la commande et délivrer l'ensemble des médicaments désirés par l'opérateur.

De façon préférée, la glissière 3 intègre un circuit imprimé 20 tel que représenté en figure 6.

C'est sur ce circuit 20 que sera positionné le circuit de commande 31.

Le circuit imprimé 20 est d'ailleurs connecté à la fois à la polarité positive de la source d'alimentation et à la polarité négative.

Qui plus est, le circuit imprimé 20 permet également la fixation du fil 12 à mémoire de forme.

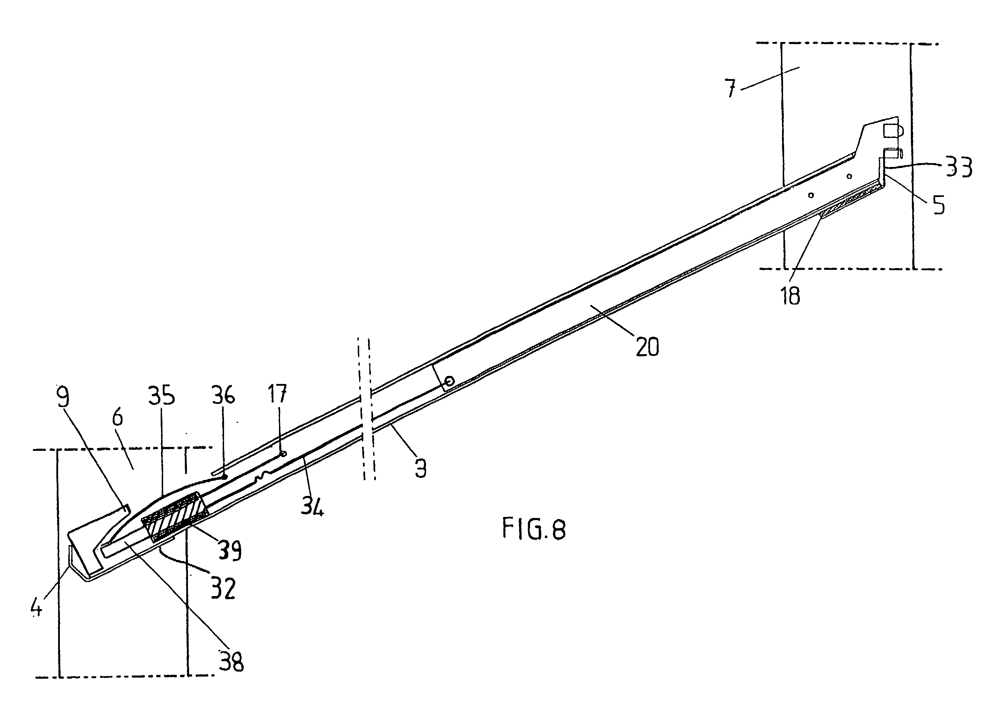

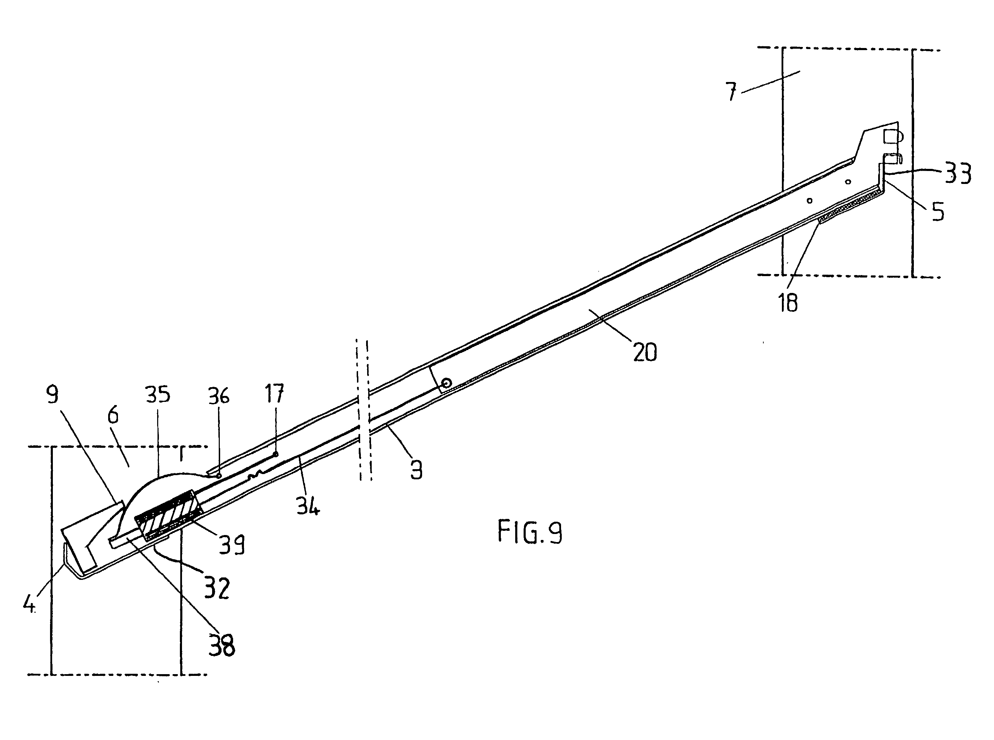

On décrit ci-après une variante des moyens d'éjection de l'objet, en référence aux figures 8 et 9.

Dans ce cadre, le moyen élévateur évoqué précédemment est constitué d'une lame flexible 35, par exemple une lamelle d'acier de faible épaisseur. Par application d'un effort à l'une des extrémités de la lame 35 (l'autre extrémité étant fixe), celle-ci se fléchie.

On utilise cette déformation en flexion pour pousser sur la face inférieure de l'objet 2, comme montré en figure 9.

De façon préférée, la mobilité de l'extrémité 37 de la lame 35 est assurée par un électroaimant 39 dont le noyau 38 est relié à ladite extrémité mobile 37.

L'alimentation de l'électroaimant 39 s'opère par les conducteurs 17, 34.

On notera que les moyens élévateur décrits ainsi que les moyens électriques d'actionnement qui les animent peuvent être employés indépendamment du circuit de commande 31 tel que le bus 30 est le circuit d'alimentation. Un système de commande électrique classique (notamment filaire) pourra ainsi être employé, tant pour l'actionnement d'un fil à mémoire de forme 12 que d'un électroaimant 35.

### REFERENCES

1. Meuble
2. Objet
3. Glissière
4. Traverse avant
5. Traverse arrière
6. Montant avant
7. Montant arrière
8. Surface de glissement
9. Butée
10. Moyen d'élévation
11. Ailes
12. Fil
13. Tige
14. Tirette
15. Rainure
16. Ressort
17. Conducteur
18. Isolant électrique
19. Carter
20. Circuit imprimé
21. Tapis roulant
22. Pan vertical
23. Extrémité
24. Objet suivant
25. Rainure
26. Réseau informatique
27. Poste de commande
28. Carte de commande
29. Accessoires pilotés
30. Bus
31. Circuit de commande
32. Polarité positive
33. Polarité négative
34. Second conducteur
35. Lame flexible
36. Extrémité fixe
37. Extrémité mobile
38. Noyau
39. Electroaimant

## Revendications

1. Dispositif de délivrance d'objets (2, 24) stockés en ligne comportant :
- des moyens de guidage des objets,
- une butée (9) de l'objet (2) placé en tête de ligne,
- des moyens d'éjection dudit objet (2) hors de la butée (9)
et des moyens électriques d'actionnement alimentés par une source d'alimentation en énergie électrique via un circuit d'alimentation électrique, **caractérisé par le fait**
**qu'**il comprend un circuit de commande (31) des moyens électriques d'actionnement dont le bus (30) de transmission d'instructions est ledit circuit d'alimentation.

2. Dispositif de délivrance d'objets (2, 24) selon la revendication 1 **caractérisé par le fait**
**que** les moyens de guidage sont au moins partiellement en un matériau électriquement conducteur en contact avec une source d'alimentation en énergie électrique et avec les moyens d'actionnement afin de les alimenter.

3. Dispositif de délivrance d'objets (2, 24) selon la revendication 2 **caractérisé par le fait**
**que** les moyens de guidage sont constitués d'une glissière (3) dont le sens long est orienté suivant la direction de la ligne d'objets et disposant d'une surface de glissement (8) inclinée par rapport à l'horizontale de sorte que l'objet (2) en tête de ligne soit en partie basse.

4. Dispositif de délivrance d'objets (2, 24) selon la revendication 3 **caractérisé par le fait**
**que** la butée (9) est un rebord faisant saillie en partie basse de la surface de glissement (8).

5. Dispositif de délivrance d'objets (2, 24) selon la revendication 4 **caractérisé par le fait**
**que** les moyens d'éjection comprennent un moyen élévateur (10) apte à élever la partie avant de l'objet (2) en tête de ligne au-delà de la hauteur du rebord.

6. Dispositif de délivrance d'objets (2, 24) selon la revendication 5, **caractérisé par le fait**
**que** le moyen élévateur est constitué d'une lame flexible (35) dont une extrémité (36) est fixe et l'autre extrémité (37) est mobile en translation, apte à appliquer un effort de poussée sur la face inférieure de l'objet (2) placé en tête de ligne lorsqu'elle est fléchie.

7. Dispositif de délivrance d'objets (2, 24) selon la revendication 6, **caractérisé par le fait**
**que** les moyens électriques d'actionnement comprennent un électromaimant (39) dont le noyau (38) est relié à l'extrémité mobile (37) de la lame flexible (35).

8. Dispositif de délivrance d'objets (2, 24) selon la revendication 5 **caractérisé par le fait**
**que** le moyen élévateur (10) est une roue à ailes (11) aptes à appliquer un effort de poussée sur la face inférieure de l'objet (2) placé en tête de ligne.

9. Dispositif de délivrance d'objets (2, 24) selon la revendication 8 **caractérisé par le fait**
**que** les moyens électriques d'actionnement comprennent un fil à mémoire de forme (12) fixé d'une part à la glissière (3) et d'autre part à une tirette (14) entraînant le moyen élévateur (10).

10. Dispositif de délivrance d'objets (2, 24) selon la revendication 9 **caractérisé par le fait**
**que** les moyens d'actionnement comprennent un organe de retour élastique en position.

11. Dispositif de délivrance d'objets (2, 24) selon l'une quelconque des revendications 1 à 10 **caractérisé par le fait**
**que** les moyens de guidage intègrent un circuit imprimé (20) participant au circuit de commande (21) des moyens électriques d'actionnement.

12. Dispositif de délivrance d'objets (2, 24) selon la revendication 11 en combinaison avec la revendication 9 ou 10 **caractérisé par le fait**
**que** le fil à mémoire de forme (12) est fixé à la glissière (3) par le biais du circuit imprimé (20).

13. Dispositif de délivrance d'objets (2, 24) selon l'une quelconque des revendications 1 à 12 **caractérisé par le fait**
**que** les moyens de guidage sont montés entre une traverse avant (4) et une traverse arrière (5) solidaires de montants (6, 7).

14. Dispositif de délivrance d'objets (2, 24) selon l'une quelconque des revendications 1 à 13 **caractérisé par le fait**
- **que** la source d'alimentation en énergie électrique est un générateur de courant continu,
- **que** chaque traverse (4, 5) est au moins partiellement en un matériau conducteur relié à l'un des pôles de la source,
- **que** la traverse (4) reliée au pôle positif de la source est fixée aux moyens de guidage en continuité électrique.

15. Installation pour la délivrance d'objets stockés en ligne à l'intérieur d'un ou plusieurs meubles (1) intégrant un ou plusieurs dispositifs de délivrance selon l'une des revendications 1 à 14.

16. Installation selon la revendication 14 **caractérisée par le fait**
- **qu'**elle comporte une carte de commande (28) pilotant chaque circuit de commande (31) et recevant ses instructions depuis un réseau informatique (26).

17. Installation selon la revendication 16 **caractérisée par le fait que**
- la source d'alimentation en énergie électrique est un générateur de courant continu commun à tous les dispositifs de délivrance,
- le codage des données binaires sur le bus (30) est constitué par deux types d'interruptions de l'alimentation de longueurs différentes et correspondant soit à un 1 logique, soit à un 0 logique.

## Claims

1. Device for delivering objects (2, 24) stored in line comprising:
• means for guiding the objects,
• a stop (9) retaining object (2) placed at the head of the line,
• means for ejecting aforesaid object (2) beyond stop (9),
and electric actuating means supplied from an electric power source via an electric supply circuit, **characterized in that**
it includes a circuit (31) controlling the electric actuation means whose bus (30) for transmitting instructions is the aforementioned supply circuit.

2. Device for delivering objects (2, 24) according to claim 1 **characterized in that**
the guide means are at least partly made of an electrically conducting material in contact with an electric power source and with the actuating means to supply them.

3. Device for delivering objects (2, 24) according to claim 2 **characterized in that**
the guide means consist of a slide (3) whose long direction is oriented in the same direction as the line of the objects and having a sliding surface (8) tilted relative to the horizontal so that object (2) at the head of the line is in the low part.

4. Device for delivering objects (2, 24) according to claim 3 **characterized in that**
stop (9) is an edge projecting in the lower part of the sliding surface (8)

5. Device for delivering objects (2, 24) according to claim 4 **characterized in that**
the ejection means include lifting means (10) capable of raising the forward part of object (2) at the head of the line above the level of the edge.

6. Device for delivering objects (2, 24) according to claim 5, **characterized in that**
the lifting means consist of a flexible blade (35) whose one end (36) is fixed and other end (37) is mobile in translation which, when it is curved, applies a force to the underside of object (2) at the head of the line.

7. Device for delivering objects (2, 24) according to claim 6, **characterized in that**
the electric actuating means include an electromagnet (39) whose core (38) is connected to the mobile end (37) of flexible blade (35).

8. Device for delivering objects (2, 24) according to claim 5 **characterized in that**
lifting means (10) is a wheel with wings (11) which applies a force to the underside of object (2) at the head of the line.

9. Device for delivering objects (2, 24) according to claim 8 **characterized in that**
the electric actuating means include a shape metal memory wire (12) fixed on one hand to slide (3) and on the other to a pull tab (14) operating lifting means (10).

10. Device for delivering objects (2, 24) according to claim 9 **characterized in that**
the actuating means include an elastic return device.

11. Device for delivering objects (2, 24) according to any of claims 1 to 10 **characterized in that**
the guide means incorporate a printed circuit (20) acting with control circuit (21) of the electric actuating means.

12. Device for delivering objects (2, 24) according to claim 11 acting in combination with claim 9 or 10 **characterized in that**
shape metal memory wire (12) is fixed to slide (3) using printed circuit (20)

13. Device for delivering objects (2, 24) according to any of claims 1 to 12 **characterized in that**
the guide means are assembled between a forward cross-piece (4) and a rear cross-piece (5) attached to uprights (6, 7)

14. Device for delivering objects (2, 24) according to any of claims 1 to 13 **characterized in that**
- the electric power is supplied by a d.c. generator,
- each cross-piece (4, 5) is at least partly made of conducting material connected to one of the poles of the power source,
- cross-piece (4) connected to the source positive pole is fixed to the guide means to ensure electrical continuity.

15. Installation for delivering objects stored in line inside one or more units (1) incorporating one or more delivery devices according to one of claims 1 to 14.

16. Installation according to claim 14 **characterized in that**
- it includes a control card (28) operating each control circuit (31) and receiving its instructions from a data-processing network (26)

17. Installation according to claim 16 **characterized in that**
- the electrical power supply is a d.c. generator common to all the delivering devices,
- the coding of the binary data on bus (30) consists of two types of supply switch of different lengths and correspondent either to a 1 logic, or a 0 logic.

## Patentansprüche

1. Vorrichtung zur Ausgabe von in Reihe gelagerten Gegenständen (2, 24) mit:
- Führungen für diese Gegenstände,
- einem Anschlag (9) für den Gegenstand (2) am Kopf der Reihe,
- Mitteln zum Ausstoßen des Gegenstandes (2) über den Anschlag (9) hinweg sowie einer elektrischen Betätigungseinrichtung, die über eine elektrische Stromversorgungsschaltung von einer elektrischen Energiequelle aus versorgt wird, **gekennzeichnet dadurch,**
**dass** sie eine Steuerschaltung (31), elektrische Betätigungseinrichtungen, darunter den Bus (30) zur Übertragung der Anweisungen und die genannte Stromversorgungsschaltung besitzen.

2. Vorrichtung zur Ausgabe von Gegenständen (2, 24) gemäß Patentanspruch 1, **gekennzeichnet dadurch, dass**
die Führungen zumindest teilweise aus einem elektrisch leitenden Werkstoff bestehen, der mit einer elektrischen Energiequelle und den Betätigungseinrichtungen zu ihrer Stromversorgung in Kontakt sind.

3. Vorrichtung zur Ausgabe von Gegenständen (2, 24) gemäß Patentanspruch 2, **gekennzeichnet dadurch, dass**
die Führungen aus einer Gleitschiene (3) bestehen, deren Längsrichtung in Richtung der Reihe der Gegenstände zeigt und die eine gegen die Horizontale geneigte Gleitfläche (8) besitzt, so dass sich der Gegenstand (2) am Kopf der Reihe in unterster Position befindet.

4. Vorrichtung zur Ausgabe von Gegenständen (2, 24) gemäß Patentanspruch 3, **gekennzeichnet dadurch, dass**
der Anschlag (9) durch einen Vorsprung im unteren Bereich der Gleitfläche (8) gebildet wird.

5. Vorrichtung zur Ausgabe von Gegenständen (2, 24) gemäß Patentanspruch 4, **gekennzeichnet dadurch, dass**
die Mittel zum Ausstoßen des Gegenstandes einen Heber (10) besitzen, der den vorderen Teil des Gegenstandes (2) am Kopf der Reihe über die Höhe des Vorsprungs anheben kann.

6. Vorrichtung zur Ausgabe von Gegenständen (2, 24) gemäß Patentanspruch 5, **gekennzeichnet dadurch, dass**
der Heber aus einer Blattfeder (35) besteht, deren eines Ende (36) unbeweglich und deren anderes Ende (37) translatorisch beweglich ist, die, wenn sie gebogen ist, eine Druckkraft auf die Unterseite des Gegenstandes (2) am Kopf der Reihe ausüben kann.

7. Vorrichtung zur Ausgabe von Gegenständen (2, 24) gemäß Patentanspruch 6, **gekennzeichnet dadurch, dass**
die elektrischen Betätigungsmittel aus einem Elektromagneten (39) bestehen, dessen Kern (38) mit dem beweglichen Ende (37) der Blattfeder (35) verbunden ist.

8. Vorrichtung zur Ausgabe von Gegenständen (2, 24) gemäß Patentanspruch 5, **gekennzeichnet dadurch, dass**
der Heber (10) ein Flügelrad (11) ist, dessen Flügel eine Druckkraft auf die Unterseite des am Kopf der Reihe befindlichen Gegenstandes (2) ausüben können.

9. Vorrichtung zur Ausgabe von Gegenständen (2, 24) gemäß Patentanspruch 8, **gekennzeichnet dadurch, dass**
die elektrische Betätigungseinrichtung einen Draht mit Formgedächtnis besitzt (12), der auf der einen Seite an der Gleitschiene (3) und der anderen an einem Zugstab (14) befestigt ist, der den Heber (10) mitnimmt.

10. Vorrichtung zur Ausgabe von Gegenständen (2, 24) gemäß Patentanspruch 9, **gekennzeichnet dadurch, dass**
die Betätigungseinrichtungen ein elastisches Organ zum Zurückholen in die Ausgangsposition besitzen.

11. Vorrichtung zur Ausgabe von Gegenständen (2, 24) gemäß einem der Patentansprüche 1 bis 10, **gekennzeichnet dadurch, dass**
die Führungen eine eingebaute gedruckte Schaltung besitzen (20), die Bestandteil der Steuerschaltung (21) der elektrischen Betätigungseinrichtung ist.

12. Vorrichtung zur Ausgabe von Gegenständen (2, 24) gemäß Patentanspruch 11 in Kombination mit Patentanspruch 9 oder 10, **gekennzeichnet dadurch, dass**
der Draht mit Formgedächtnis (12) an der Gleitschiene (3) mit Hilfe der gedruckten Schaltung (20) befestigt ist.

13. Vorrichtung zur Ausgabe von Gegenständen (2, 24) gemäß einem der Patentansprüche 1 bis 12, **gekennzeichnet dadurch, dass**
die Führungen zwischen eine vordere Traverse (4) und eine hintere Traverse (5) montiert sind, die mit den Ständern (6, 7) fest verbunden sind.

14. Vorrichtung zur Ausgabe von Gegenständen (2, 24) gemäß einem der Patentansprüche 1 bis 13, **gekennzeichnet dadurch, dass**
- die elektrische Energiequelle ein Gleichstromgenerator ist,
- jede Traverse (4, 5) zumindest teilweise aus einem elektrisch leitfähigen Werkstoff besteht, der mit einem Pol der Stromquelle verbunden ist.
- die mit dem positiven Pol der Stromquelle verbundene Traverse (4) elektrisch durchgängig an die Führung angeschlossen ist.

15. Anlage zur Ausgabe von Gegenständen, die in einem oder mehreren Möbelstücken (1) in Reihe gelagert sind, in welchen eine oder mehrere Ausgabevorrichtungen gemäß einem der Patentansprüche 1 bis 14 installiert sind.

16. Anlage gemäß Patentanspruch 14, **gekennzeichnet dadurch, dass**
- sie eine Steuerkarte (28) zur Steuerung jeder Steuerschaltung (31) besitzt, und ihre Anweisungen über ein EDV-Netzwerk (26) erhält.

17. Anlage gemäß Patentanspruch 16, **gekennzeichnet dadurch, dass**
- die elektrische Energiequelle ein allen Ausgabevorrichtungen gemeinsamer Gleichstromgenerator ist,
- die Kodierung der binären Daten auf dem Bus (30) aus zwei Arten von Unterbrechungen der Stromversorgung mit unterschiedlicher Länge besteht, die entweder einem logischen 1 oder einem logischen 0 entsprechen.
